**Europäisches Patentamt**

**European Patent Office**

**Office européen des brevets**

(19)

(11) Veröffentlichungsnummer : **0 013 575**
**B1**

(12) **EUROPÄISCHE PATENTSCHRIFT**

(45) Veröffentlichungstag der Patentschrift :
**17.03.82**

(21) Anmeldenummer : **80100148.8**

(22) Anmeldetag : **12.01.80**

(51) Int. Cl.³ : **B 26 D 7/06, B 02 C 18/22, B 29 B 1/02// C03B37/16**

(54) **Granulator zum Granulieren von Kunststoffsträngen.**

(30) Priorität : **12.01.79 DE 2901018**.

(43) Veröffentlichungstag der Anmeldung :
**23.07.80 (Patentblatt 80/15)**

(45) Bekanntmachung des Hinweises auf die Patenterteilung : **17.03.82 Patentblatt 82/11**

(84) Benannte Vertragsstaaten :
**BE CH FR GB IT NL**

(56) Entgegenhaltungen :
**FR - A - 853 056**
**US - A - 2 719 336**
**US - A - 2 812 815**
**US - A - 2 995 173**

(73) Patentinhaber : **C.F. Scheer & Cie. GmbH & Co.**
**Ludwigsburger Strasse 13**
**D-7000 Stuttgart 30 (DE)**

(72) Erfinder : **Bohnert, Eckhard**
**Holdergasse 24**
**D-7141 Schwieberdingen (DE)**
Erfinder : **Kreuz, Ulrich**
**Hölderlinweg 18**
**D-7141 Erdmannhausen (DE)**

(74) Vertreter : **Hoeger, Stellrecht & Partner**
**Uhlandstrasse 14c**
**D-7000 Stuttgart-1 (DE)**

EP 0 013 575 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

## Granulator zum Granulieren von Kunststoffsträngen

Die Erfindung betrifft einen Granulator zum Granulieren von Kunststoffsträngen, welcher eine Schneidwalze, ein dieser vorgeschaltetes, antreibbares Einzugswalzenpaar und eine vor diesem liegende Einlaufstrecke aufweist, in welcher sich vor dem Einzugswalzenpaar eine Auflage für die Kunststoffstränge befindet, wobei die beiden Walzen des Einzugswalzenpaars einen veränderlichen Einzugsspalt bilden.

Bei bekannten Granulatoren dieser Art sind die Einzugswalzen so angeordnet, dass die unmittelbar vor ihnen befindliche Auflagestelle für die Kunststoffstränge zwischen den beiden im Einzugsspalt an die Einzugswalzen angelegten Tangentialebenen liegt. Damit die Einzugswalzen die Kunststoffstränge gegen die Schneidwalze verschieben können, müssen die Einzugswalzen jeden einzelnen Kunststoffstrang im Einzugsspalt zwischen sich klemmend erfassen was wegen der schwankenden Strangdurchmesser bei den bekannten Granulatoren bestimmte Massnahmen erforderlich macht. Bei nahezu allen bekannten Granulatoren mit einem vor der Schneidwalze angeordneten Einzugswalzenpaar ist die eine Walze, die sogenannte Unterwalze, aus Verschleissgründen als Stahlwalze mit einem durchgehenden steifen Stahlmantel ausgebildet, während die andere Walze, die sogenannte Oberwalze, in den meisten Fällen einen elastisch nachgiebigen, den Walzemantel bildenden elastomeren Belag besitzt, um bei der Verarbeitung einer Schar von Kunststoffsträngen trotz deren unterschiedlicher und schwankender Durchmesser alle Stränge stets klemmend erfassen zu können. Um den raschen Verschleiss der Oberwalze zu verhindern, ist aber auch schon ein Granulator der eingangs erwähnten Art bekanntgeworden, bei dem der die Unterwalze bildenden Stahlwalze eine Oberwalze zugeordnet ist, deren Umfang von nebeneinander angeordneten, jeweils zu einem Kunststoffstrang gehörenden Stahlringen gebildet wird, die auf einem Achskörper mit einem elastomeren Mantel angeordnet sind, so dass jeder einzelne Stahlring in Richtung senkrecht zur Walzenachse ausweichen und auf diese Weise unterschiedlichen und schwankenden Durchmessern der Kunststoffstränge Rechnung tragen kann. Dass die zuletzterwähnte bekannte Konstruktion aufwendig ist, steht ausser Frage, während die an erster Stelle beschriebene Konstruktion einem verhältnismässig starken Verschleiss unterliegt, vor allem dann, wenn glasfaserverstärkte Kunststoffe granuliert werden, so dass der Gummi- oder Kunststoffüberzug der Oberwalze verhältnismässig oft ausgewechselt werden muss.

Weil selbst bei einem klemmenden Erfassen der Kunststoffstränge zwischen den Einzugswalzen der geschilderten bekannten Granulatoren die auf die Kunststoffstränge ausgeübten Zugkräfte oft noch als ungenügend empfunden werden, ist es auch schon bekannt geworden, einen sogenannten Vorabzug vorzusehen, d.h. Granulatoren mit mehreren aufeinanderfolgenden Einzugswalzenpaaren zu versehen, was jedoch nicht nur teuer ist, sondern beim Anfahren einer Stranggranulieranlage oder bei einem Strangbruch zu Problemen führen kann.

Der Erfindung lag deshalb die Aufgabe zugrunde, die Granulatoren der eingangs erwähnten Art so zu verbessern, dass man auf ein klemmendes Erfassen der Kunststoffstränge zwischen den Einzugswalzen verzichten kann und trotzdem mit einem einzigen Einzugswalzenpaar auskommt. Diese Aufgabe lässt sich erfindungsgemäß dadurch lösen, dass die letzte Auflage für die Kunststoffstränge vor den Einzugswalzen derart ausserhalb der im Einzugsspalt an die beiden Einzugswalzen angelegten Tangentialebenen liegt, dass die Kunststoffstränge eine erste der beiden Einzugswalzen längs eines Umfangswinkels umschlingen, welcher einerseits so gross ist, dass durch die Einzugswalzen hinreichende Vorschubkräfte auf die Kunststoffstränge ausübbar sind, und welcher andererseits um so viel unter 90° liegt, dass freie Kunststoffstrangenden noch in den Einzugsspalt gelangen ; vorzugsweise beträgt der Umschlingungswinkel ungefähr 45°. Die Erfindung macht dabei von der Erkenntnis Gebrauch, dass man in völliger Abkehr vom Stand der Technik von einem klemmenden Erfassen aller Kunststoffstränge in jedem Strangbereich und damit von der Verwendung elastisch nachgiebiger Einzugswalzen absehen kann, wenn man durch eine entsprechende Anordnung der beiden Einzugswalzen relativ zueinander sowie zur letzten Auflagestelle für die Kunststoffstränge vor den Einzugswalzen erreicht, dass die Kunststoffstränge eine der Einzugswalzen hinreichend umschlingen und sich dabei dank ihrer Eigensteifigkeit auch gegen die andere angetriebene Einzugswalze anlegen, so dass dadurch hinreichende Vorschubkräfte auf die Kunststoffstränge ausgeübt werden. Da es bei einem erfindungsgemässen Granulator nicht darauf ankommt, dass stets alle Kunststoffstränge von den Einzugswalzen klemmend erfasst werden, eröffnet die Erfindung auch die Möglichkeit, sich rasch verschleissende oder teuere segmentierte Einzugswalzen zu vermeiden.

Bei einer bevorzugten Ausführungsform des erfindungsgemässen Granulators weisen deshalb beide Einzugswalzen einen durchgehenden, steifen Stahlmantel auf, und vorzugsweise ist die Breite des Einzugsspalts fest auf den grössten vorkommenden Durchmesser der zu verarbeitenden Kunststoffstränge einstellbar.

Mit einem erfindungsgemässen Granulator, der billig und dauerhaft ist, lassen sich also auch stark abrasive Kunststoffe, z.B. Glasfaser-verstärkte Kunststoffe, verarbeiten.

Bei einer bevorzugten Ausführungsform des erfindungsgemässen Granulators ist der Durchmesser der zweiten Einzugswalze ungefähr gleich demjenigen der ersten Einzugswalze und vorzugsweise geringfügig kleiner als jener — im Gegensatz dazu ist bei den bekannten Granulatoren die sogenannte unterwalze in der Regel wesentlich kleiner als die sogenannte Oberwalze. Durch die erfindungsgemässe Bemessung der Walzendurchmesser ergibt sich der Vorteil einer grösseren Länge des Umfangsflächenbereichs, längs welchem die Kunststoffstränge gegen die Unterwalze anliegen, ohne dass dadurch die Schneidwalze in einem grösseren Abstand vom Einzugswalzenpaar angeordnet werden muss, da für die Unterwalze ohnehin hinreichend Platz zur Verfügung steht.

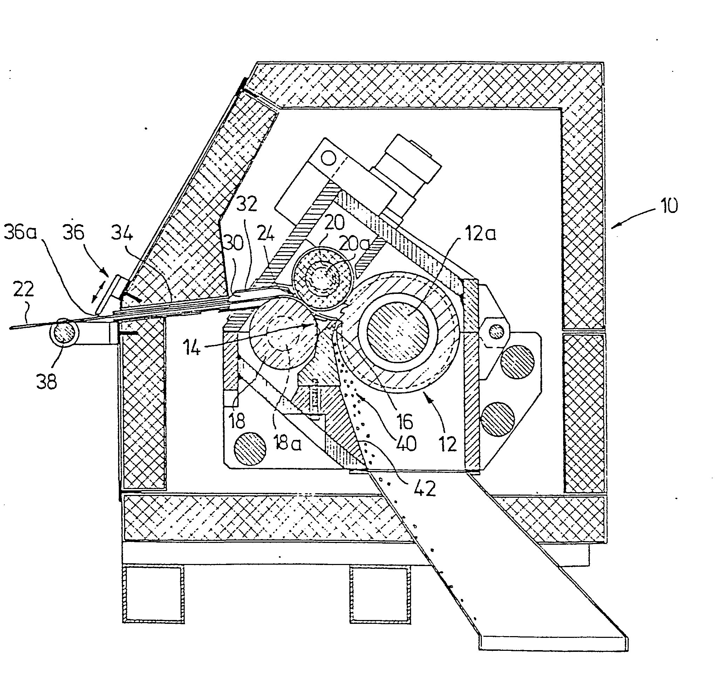

Im folgenden wird eine bevorzugte Ausführungsform eines erfindungsgemässen Granulators anhand der Zeichnung erläutert, welche einen teilweise schematisierten Querschnitt durch den Granulator senkrecht zu den Walzenachsen zeigt.

In einem Gehäuse 10 ist eine im Gegenuhrzeigersinn angetriebene, als Schneidwalze dienende Messerwalze 12 in nicht näher dargestellter Weise drehbar gelagert. Unmittelbar vor der Messerwalze befindet sich eine Auflage 14 mit einem schräg nach oben in Richtung auf die Schneiden der Messerwalze 12 zustellbaren Gegenmesser 16. Vor dieser Auflage liegt ein von einer Unter- und einer Oberwalze 18 bzw. 20 gebildetes Einzugswalzenpaar, dessen Walzen so angetrieben werden, dass sie die mit 22 bezeichneten Kunststoffstränge in Richtung auf die Messerwalze 12 vorschieben. Der Antrieb und die Lagerung der Walzen 18 und 20 wurden der Einfachheit halber in der Zeichnung nicht dargestellt. Erwähnenswert ist jedoch, dass erfindungsgemäss die Weite des von den beiden Walzen gebildeten Spalts 24 auf feste Werte einstellbar ist, z.B. dadurch, dass eine Halterung für die Lager der Oberwalze 20 in Richtung auf die Unterwalze 18 eingestellt werden kann. Selbstverständlich sind die Achsen 18a und 20a des Einzugswalzenpaars parallel zur Achse 12a der Messerwalze 12.

Vor dem Einzugswalzenpaar 18, 20 befindet sich ein Führungskanal 30 mit rechteckigen Querschnitt, dessen obere Wand von einem Leitblech 32 gebildet wird, das vorteilhafterweise in Laufrichtung der Kunststoffstränge 22 nach unten in Richtung auf den Spalt 24 gekrümmt ist. Wesentlich ist nicht die Tatsache eines geschlossenen Führungskanals, sondern es könnte unter Umständen auch einfach mit einem Leitblech gearbeitet werden, welches dafür sorgt, dass beim Anfahren oder einem Strangbruch die Stränge in den Spalt 24 hineingeführt werden.

Vor dem Führungskanal 30 liegen ein weiterer Kanal 34, ein in Pfeilrichtung verschiebbarer Niederhalter 36 sowie eine Auflagewalze 38, die frei drehbar vor dem Gehäuse 10 gelagert ist und von den Kunststoffsträngen 22 in Drehung versetzt werden kann. Der Niederhalter 36 besitzt vorteilhafterweise eine Keramikleiste 36a und liegt bei der dargestellten Ausführungsform unter seinem Eigengewicht auf den Kunststoffsträngen 22 auf, da er am Gehäuse 10 frei verschiebbar geführt ist.

Das von der Messerwalze 12 erzeugte Granulat 40 wird über einen Schacht 42 abgeführt.

Wie die Zeichnung erkennen lässt, die eine der beiden Walzen — bei dem gezeichneten Ausführungsbeispiel die Oberwalze 20 — erfindungsgemäss so angeordnet, dass sie die ankommenden Kunststoffstränge zwangsläufig über einen gewissen Winkelbereich an den Umfang der anderen Walze (Unterwalze 18) anlegt, wodurch auf eine Klemmung der Kunststoffstränge im Spalt 24 zwischen den Walzen 18 und 20 verzichtet werden kann. Andererseits ist aber die Umschlingung der einen Walze, nämlich der Unterwalze 18, wiederum nicht so gross, dass ein entsprechender Versatz der anderen Walze, nämlich der Oberwalze 20, zu der Gefahr führen würde, dass beim Anfahren des Granulators oder beim Strangbruch die freien Enden der Kunststoffstränge nicht auf den Einlaufbereich des Spalts 24 auftreffen. Schliesslich ist erfindungsgemäss die Auflage 14 bezüglich der im Spalt 24 an die Walzen 18, 20 angelegten Tangenten so angeordnet, dass die den Spalt 24 verlassenden Kunststoffstränge unter leichter Biegespannung auf dem Gegenmesser 16 aufliegen.

Es ist ein ganz wesentlicher Vorzug des erfindungsgemässen Granulators, dass nur ein einziges Einzugswalzenpaar erforderlich ist, und zwar dank der teilweisen Umschlingung der einen Einzugswalze durch die Kunststoffstränge, so dass das Anfahren des erfindungsgemässen Granulators sowie Strangbrüche nicht diejenigen Probleme mit sich bringen, mit denen man bei einem Granulator mit einem sogenannten Vorabzug bzw. mehreren hintereinander angeordneten Einzugswalzen zu rechnen hat ; ausserdem ist es natürlich kostensparend, wenn man mit einem einzigen Einzugswalzenpaar auskommt.

**Ansprüche**

1. Granulator zum Granulieren von Kunststoffsträngen (22), mit einer Schneidwalze (12), einem dieser vorgeschalteten, antreibbaren Einzugswalzenpaar (18, 20) und einer vor diesem liegenden Einlaufstrecke, in welcher sich vor dem Einzugswalzenpaar eine Auflage (38) für die Kunststoffstränge (22) befindet, wobei die beiden Walzen (18, 20) des Einzugswalzenpaars einen veränderlichen Einzugsspalt bilden, dadurch gekennzeichnet, daß die Auflage (38) derart außerhalb der im Einzugsspalt (24) an die beiden Einzugswalzen (18, 20) angelegten Tangentialebenen liegt, daß die Kunststoffstränge (22) eine erste (18) der beiden Einzugswalzen längs eines Umfangswinkels umschlingen, welcher einerseits so groß ist, daß durch die Einzugswalzen (18, 20) hinreichende Vorschubkräfte auf die Kunststoffstränge (22) ausübbar sind, und welcher andererseits um so viel unter 90° liegt, daß freie Kunststoffstrangenden noch in den Einzugsspalt (24) gelangen.

2. Granulator nach Anspruch 1, dadurch gekennzeichnet, daß beide Einzugswalzen (18, 20) einen durchgehenden, steifen Stahlmantel aufweisen.

3. Granulator nach Anspruch 1 oder 2, dadurch gekennzeichnet, daß die Breite des Einzugsspalts (24) fest auf den größten Durchmesser der Kunststoffstränge (22) einstellbar ist.

4. Granulator nach einem oder mehreren der vorstehenden Ansprüche, dadurch gekennzeichnet, dass der Durchmesser der in Laufrichtung der Kunststoffstränge (22) hinter einer ersten Einzugswalze (18) liegenden zweiten Einzugswalze (20) ungefähr gleich demjenigen der ersten Walze und vorzugsweise geringfügig kleiner ist.

5. Granulator nach einem oder mehreren der vorstehenden Ansprüche, dadurch gekennzeichnet, dass der Umfang der zweiten Walze (20) demjenigen der Schneidwalze (12) unmittelbar benachbart ist.

6. Granulator nach einem oder mehreren der vorstehenden Ansprüche, dadurch gekennzeichnet, dass die Einlaufstrecke auf der Seite der zweiten Einzugswalze (20) unmittelbar vor dieser eine Leitfläche (32) für die Kunststoffstränge (22) aufweist, welche in Richtung auf die erste Einzugswalze (18) gekrümmt ist.

7. Granulator nach Anspruch 7, dadurch gekennzeichnet, dass die Leitfläche von einem Leitblech (32) gebildet ist.

8. Granulator nach einem oder mehreren der vorstehenden Ansprüche, dadurch gekennzeichnet, dass am Einlass des Granulators für die Kunststoffstränge eine quer zu diesen verlaufende Keramik-Niederhalteleiste (36a) angeordnet ist.

## Claims

1. A granulator for granulating plastic strands (22), comprising a cutting roller (12), a drivable pair of feed rollers (18, 20), arranged in front of the cutting roller (12), and a feed path which is disposed in front of the pair of rollers (18, 20) and contains a support (38) in front of the latter for the plastic strands (22), the two rollers (18, 20) of the feed roller pair forming a variable feed opening, characterised in that the support (38) lies outside the tangent planes placed against the two feed rollers (18, 20) in the feed opening (24) such that the plastic strands (22) wind round the first (18) of the two feed rollers along a circumferential angle which, on the one hand, is so great that sufficient feed forces can be exerted on the plastic strands (22) by the feed rollers (18, 20) and which, on the other hand, is less than 90° by an amount such that free plastic strand ends still pass into the feed opening (24).

2. A granulator according to claim 1, characterised in that both feed rollers (18, 20) are provided with a one-piece, rigid steel jacket.

3. A granulator according to claim 1 or 2, characterised in that the width of the feed opening (24) can be firmly adjusted to the largest diameter of the plastic strands (22).

4. A granulator according to one or several of the preceding claims, characterised in that the diameter of the second feed roller (20) disposed in the moving direction of the plastic strands (22) behind a first feed roller (18) is approximately the same as that of the first roller and preferably slightly smaller.

5. A granulator according to one or several of the preceding claims, characterised in that the circumference of the second roller (20) is directly adjacent that of the cutting roller (12).

6. A granulator according to one or several of the preceding claims, characterised in that, on the side of the second feed roller (20) and directly in front of the latter, the feed path comprises a guide surface (32) for the plastic strands (22) which is curved in the direction of the first feed roller (18).

7. A granulator according to claim 7, characterised in that the guide surface is formed from a sheet-metal guide (32).

8. A granulator according to one or several of the preceding claims, characterised in that a ceramic holding-down bar (36a) is arranged at the inlet of the granulator for the plastic strands transversely to the latter.

## Revendications

1. Granulateur pour granuler des boudins de plastique (22), comportant un cylindre coupeur (12), une paire de cylindres d'alimentation (18, 20) montés en amont et pouvant être entraînés, ainsi qu'une longueur d'entrée en amont de cette paire de cylindres et dans laquelle se trouve, devant la paire de cylindres d'alimentation, un support (38) pour les boudins de plastique (22), les deux cylindres (18, 20) de la paire de cylindres d'alimentation formant une fente d'alimentation variable, caractérisé en ce que le support (38) se situe en dehors des plans tangents aux deux cylindres d'alimentation (18, 20), dans la fente d'introduction (24), de façon telle que les boudins de plastique (22) s'enroulent, autour du premier (18) des deux cylindres d'alimentation, le long d'un secteur périphérique d'un angle suffisamment grand pour que les cylindres d'alimentation (18, 20) puissent excercer sur les boudins de plastique (22) des forces de poussées suffisantes, mais, d'un autre côté, suffisamment inférieur à 90° pour que des extrémités libres des boudins de plastique parviennent encore dans la fente d'alimentation (24).

2. Granulateur selon la revendication 1, caractérisé en ce que la surface latérale des deux cylindres d'alimentation (18, 20) est en acier continu et rigide.

3. Granulateur selon la revendication 1 ou la revendication 2, caractérisé en ce que l'on peut régler de façon fixe la largeur de la fente d'alimentation (24) sur le plus grand diamètre des boudins de plastique (22).

4. Granulateur selon une ou plusieurs des revendications précédentes, caractérisé en ce que le diamètre du deuxième cylindre d'alimentation (20), situé derrière le premier cylindre d'alimentation (18), vu dans le sens d'avancement des boudins de plastique (22), est approximativement égal à celui du premier cylindre et de préférence légèrement plus faible.

5. Granulateur selon une ou plusieurs des revendications précédentes, caractérisé en ce que la surface latérale du deuxième cylindre (20) est immédiatement voisine de celle du cylindre coupeur (12).

6. Granulateur selon une ou plusieurs des revendications précédentes, caractérisé en ce que la longueur d'entrée présente, du côté du deuxième cylindre d'alimentation (20) et immédiatement devant lui, une surface de guidage (32) pour les boudins de plastique (22), surface courbée en direction du premier cylindre d'alimentation (18).

7. Granulateur selon la revendication 7, caractérisé en ce que la surface de guidage est formée d'une tôle de guidage (32).

8. Granulateur selon l'une ou plusieurs des revendications précédentes, caractérisé en ce qu'à l'entrée du granulateur pour les boudins de plastique est disposée une baguette de céramique (36a) qui court perpendiculairement aux boudins et les appuie vers le bas.